# EUROPÄISCHE PATENTSCHRIFT

(11) **EP 4 304 860 B1**
(45) Veröffentlichungstag und Bekanntmachung des Hinweises auf die Patenterteilung: **15.01.2025**
(21) Anmeldenummer: 22710114.4
(22) Anmeldetag: 07.03.2022
(51) Int. Cl.: B32B 27/08, B32B 3/08, B32B 27/18, B32B 27/30, B32B 27/32, C08L 23/12, C08L 23/14

(54) **FLEXIBLE MEHRSCHICHTFOLIE MIT HOHER KÄLTESCHLAGZÄHIGKEIT FÜR MEDIZINISCHE VERPACKUNGEN**
FLEXIBLE MULTILAYER FILM WITH HIGH LOW-TEMPERATURE IMPACT STRENGTH FOR MEDICAL PACKAGING
FEUILLE MULTICOUCHE FLEXIBLE À HAUTE RÉSISTANCE AUX CHOCS À FROID POUR EMBALLAGES MÉDICAUX

(30) Priorität: 09.03.2021 EP 21161580
(43) Veröffentlichungstag der Anmeldung: 17.01.2024
(73) Patentinhaber: PolyCine GmbH, 66578 Schiffweiler (DE)
(72) Erfinder: HOLZER, Susanne, 66564 Ottweiler (DE); GROSS, René, 66538 Neunkirchen (DE)
(74) Vertreter: Rippel, Hans Christoph
(86) Internationale Anmeldenummer: PCT/EP2022/055728
(87) Internationale Veröffentlichungsnummer: WO 2022/189345

(56) Entgegenhaltungen:
- WO-A1-2020/127227
- DE-A1- 10 361 851
- DE-U1- 20 320 212

## Beschreibung

Die Erfindung betrifft hitzesterilisierbare Mehrschichtfolien auf Basis aliphatischer Polyolefine, die eine besonders gute Schlagzähigkeit bei tieferen Temperaturen aufweisen, ein Verfahren zu deren Herstellung, sowie deren Verwendung für medizinische Verpackungen.

Mehrschichtfolien finden seit vielen Jahren ein breites Anwendungsgebiet, z.B. in der Lebensmittel-Industrie aber auch im medizinisch/pharmazeutischen Bereich beispielsweise als Sekundär-Packmittel (Umverpackung) oder Primär-Packmittel für Lösungsbeutel, Trockenkonzentrate und Medikamente in Tablettenform.

Einige Mehrschichtfolien sind zu flexiblen Verpackungen verarbeitbar, welche beispielsweise als Beutel zum Verpacken und zum Verabreichen von medizinischen Lösungen geeignet sind. Als gängige Praxis findet man derzeit medizinische Lösungen z. B. Infusionslösungen für die parenterale Verabreichung, in flexiblen Einwegbeuteln aus Polyvinylchlorid- (PVC) oder non-PVC-Materialien am Markt.

Diese Beutel müssen neben der Fähigkeit zum Kollabieren, das ein vollständiges Auslaufen des Beutels gewährleistet, weitere Leistungskriterien wie Transparenz, Heißdampfsterilisationsfähigkeit bei 121°C, ausreichende mechanische Festigkeit vor allem bei dynamischer Belastung im Schweißnahtbereich, gute Wasserdampfbarriere, Belastungsfähigkeit für übliche Druckmanschettenanwendungen z. B. Druckinfusionen und aus pharmazeutischer Sicht eine möglichst geringe Beeinflussung des Beutelinhalts durch die Verpackung aufweisen. Entsprechend den genannten Eigenschaften haben sich Mehrschichtfolien mit einem Schichtaufbau auf Basis von Polyolefinen als vorteilhaft erwiesen.

US-Patent 5,681,627 beschreibt Mehrschichtfilme - für medizinische Anwendungen wie medizinische Beutel - enthaltend a) eine erste Außenschicht enthaltend Polyurethan (PU);
b) eine zweite Außenschicht (innere Oberfläche eines Beutels, Siegelschicht) bevorzugt aus einem Blend aus PP-Homo- oder Copolymer und Elastomer; und
c) einer Mittelschicht aus einem polymeren Haftvermittler, bevorzugt einem Ethylen/α-Olefin-Copolymer. Bevorzugt wird als zweite Außenschicht ein Blend eines Propylen/Ethylen-Copolymers (80%) und eines SEBS-Blockcopolymers (20%) eingesetzt.

US-Patent 5,695,840 beschreibt 5-lagige Mehrschichtfilme - für medizinische Anwendungen wie medizinische Beutel - enthaltend a) eine erste Schicht (innere Oberfläche eines Beutels, Siegelschicht) aus einem Blend aus PP-Homo- oder Copolymer und Elastomer;
b) eine zweite zu a) benachbarte (mittlere) Schicht aus einem Ethylen/alpha-Olefin-Copolymer; c) eine dritte zu b) benachbarte (mittlere) Schicht (Ethylen/alpha-Olefin-Copolymer); d) eine vierte zu c) benachbarte haftvermittelnde Schicht (Anhydridmodifizierte Copolymere); und e) eine fünfte Schicht (Außenschicht) aus einem Polyamid oder Copolyester.

US-Patent 5,783,269 offenbart hitzesterilisierbare Mehrschichtfilme zur Herstellung von medizinischen Beuteln, enthaltend eine äußere Schicht (2), eine Trägerschicht (4) und eine flexible Mittelschicht (3) und gegebenenfalls eine Heißsiegelschicht (5), wobei alle Schichten Polyolefinhomo- und/oder copolymere (Erweichungstemperatur: (2) und (4) > 121 °C, (3) < 70°C) enthalten. Beispielhafte 4-lagige Filme sind aufgebaut aus: (2) und (4) PP-Homopolymer, (3) PE- oder PP-Copolymer, (5) PP-Copolymer.

EP-A 0229475 beschreibt eine Mehrschichtfolie für medizinische Behälter, die bevorzugt 3-lagig ist, enthaltend (a) eine erste (= innenliegende) heißsiegelfähige Schicht aus einer Mischung eines (i) Polypropylens, (ii) einem Ethylen-Copolymer und (iii) einem Modifikator wie einem weiteren Ethylen-Copolymer oder einem Elastomer (z.B. EPDM-Terpolymer, SBS-, SEBS-, und SIS-Copolymer); (b) eine zweite (mittlere) Schicht aus einer Mischung von (i) Polyethylen (PE) (50 bis 90 Gew.-%) und (ii) einem Modifikator; und (c) eine dritte (äußere) Schicht aus einer Mischung von (i) Polypropylen und (ii) einem Modifikator. Bevorzugt werden für die äußere Schicht modifizierte PP-Copolymere eingesetzt.

EP-A 0199871 beschreibt eine flexible u.a. dreilagige Mehrschicht-Folie für medizinische Beutel, umfassend: (a) eine (innenliegende) Siegelschicht enthaltend ein (optional modifiziertes) Ethylen-Propylen-Copolymer (Ethylen-Gehalt: 3.8 Gew.-%); (b) eine mittlere Schicht aus einem flexiblen Polymermaterial (z.B. ein elastomeres Co- oder Terpolymer wie EPDM) und (c) eine äußere Schicht enthaltend ein Ethylenpropylen-Copolymer.

DE-A 10361851 und WO 2020/127227 A1 beschreiben eine hitzesterilisierbare 3-lagige Mehrschichtfolie zur Herstellung von medizinischen Beuteln, deren Außenschicht aus mit Impact Modifiern modifiziertem Polypropylen-Homopolymer (mindestens 70 Gew.-%, Beispiel 97 Gew.-%), deren Mittelschicht aus mit Impact Modifiern modifiziertem Polypropylen-Terpolymer, und deren (siegelfähige) Innenschicht aus mit Impact Modifiern modifiziertem Polypropylen-Terpolymer und/oder Polypropylen-Copolymer, besteht. Geeignete Impact-Modifier sind Styrol-Ethylen/Butylen-(SEBS)-, Styrol-Ethylen/Propylen-(SEPS)-Blockcopolymere oder Ethylen/α-Olefin-Copolymere. Die Mittelschicht kann 20 bis 80 Gew.-% PP-Terpolymer, 0 bis 40 Gew.-% Polyethylen-Copolymer, 0 bis 60 Gew.-% SEB- oder SEP-Blockcopolymer enthalten. Beispielhafte Folien weisen eine Mittelschicht aus 75 Gew.-% PP-Terpolymer, 20 Gew.-% SEBS-Blockcopolymer und 5 Gew.-% PE-Plastomer (Ethylen/Octen-Copolymer), und eine Innenschicht aus 85 bzw. 75 Gew.-% PP-Terpolymer, 15 bzw. 20 Gew.-% SEB-Blockcopolymer und 0 bzw. 5 Gew.-% PE-Plastomer auf.

DE 203 20 212 U1 beschreibt eine hitzesterilisierbare 3-lagige Mehrschichtfolie hergestellt durch Coextrusion zur Verwendung für medizinische Beutel. Beispielhafte Folien weisen eine Außenschicht aus 97 Gew.-% Polypropylen-Homopolymer und 3 Gew.-% SEBS-Blockcopolymer, eine Mittelschicht aus 80 Gew.-% EXCELLEN - einem heterophasigen Copolymer auf Basis von Polypropylen und Polyethylen, und 20 Gew.-% SEBS-Blockcopolymer, und eine Innenschicht aus 75 Gew.-% PP-Terpolymer, 20 Gew.-% SEBS-Blockcopolymer und 5 Gew.-% PE-Plastomer auf.

Obwohl mit den bekannten Folien bereits gute Ergebnisse im Hinblick auf Flexibilität, Heißsterilisationsfähigkeit und Transparenz erzielt werden konnten, sind diese Folien insbesondere im Hinblick auf die Schlagzähigkeit, insbesondere bei tieferen Temperaturen, oftmals 4 bis -70°C, insbesondere -18 bis -40 °C, noch verbesserungsbedürftig, und für medizinische Verpackungen, die im Kühlschrank oder Gefrierschrank gelagert werden nur unzureichend geeignet.

Auf dem Markt befindliche Materialien für Tiefkühlanwendungen sind zum einen Verpackungen (z.B. Beutel) aus reinem Polyethylen (z.B. für Lebensmittel) oder aus Polyvinylchlorid (z.B. für Blutplasma). PE-Beutel, die über eine sehr gute Kälteschlagzähigkeit verfügen, haben den Nachteil, dass sie nicht für eine Heißsterilisation bei 121 °C - wie bei medizinischen Folien erforderlich - geeignet sind. PVC-haltige Materialien werden als gesundheitsschädlich erachtet, da sie üblicherweise Weichmacher enthalten, die oftmals entweichen, so dass man versucht, PVC durch alternative Materialien zu ersetzen. Das gilt umso mehr für medizinische Verpackungen und für Verpackungen, die im Kühlschrank oder Gefrierschrank gelagert werden.

Aufgabe der Erfindung ist es daher, eine hitzesterilisierbare Mehrschichtfolie für medizinische Verpackungen, die eine besonders gute Kälteschlagzähigkeit erfordern, bereitzustellen, die die zuvor genannten Nachteile nicht aufweist. Ferner soll die Mehrschichtfolie bzw. aus dieser hergestellte Verpackungen Eigenschaften wie hohe Transparenz, Heißdampfsterilisationsfähigkeit bei 121°C, ausreichende mechanische Festigkeit vor allem bei dynamischer Belastung im Schweißnahtbereich, gute Wasserdampfbarriere, Belastungsfähigkeit für übliche Druckmanschettenanwendungen, z.B. Druckinfusion, und die Fähigkeit von Beuteln zum Kollabieren beibehalten.

Eine weitere Aufgabe der Erfindung ist es, ein Verfahren zur Herstellung der hitzesterilisierbaren Mehrschichtfolie, insbesondere ein Verfahren zur Herstellung von einem Folienschlauch auf Basis der hitzesterilisierbaren Mehrschichtfolie, bereitzustellen.

Ein Gegenstand der Erfindung ist eine hitzesterilisierbare Mehrschichtfolie, umfassend (bestehend aus)
a) eine erste Polymerschicht (A) enthaltend (bestehend aus) mindestens ein, vorzugsweise ein, mit mindestens einem, vorzugsweise einem, Impact Modifier modifiziertes Polypropylen-Homopolymer;
b) eine zweite Polymerschicht (B) enthaltend (bestehend aus):
   B1) 51 bis 68 Gew.-% - bezogen auf (B) - mindestens eines Polypropylen-Terpolymers;
   B2) 12 bis 22 Gew.-%- bezogen auf (B) - mindestens eines Styrol-Blockcopolymer (SBC) Elastomers;
   B3) 15 bis 35 Gew.-% - bezogen auf (B) - mindestens eines Propylen-Ethylen-(Block)Copolymers, worin - bezogen auf (B3) - der Anteil der Struktureinheiten von Ethylen ≥ 9 Gew.-%, oft 9 bis 15 Gew.-%, bevorzugt ≥ 10 Gew.-%; und
c) eine mittlere Polymerschicht (C), die sich zwischen der ersten Polymerschicht (A) und der zweiten Polymerschicht (B) befindet, enthaltend (bestehend aus):
   C1) 20 bis 30 Gew.-% - bezogen auf (C) - mindestens eines Styrol-Blockcopolymer (SBC) Elastomers;
   C2) 15 bis 30 Gew.-% - bezogen auf (C) - mindestens eines Polyethylen-Elastomers, welches ein Copolymer von Ethylen mit einem alpha-Olefin enthaltend 4 bis 12 Kohlenstoffatome ist;
   C3) 40 bis 65 Gew.-% - bezogen auf (C) - mindestens eines Propylen-Ethylen-(Block)Copolymers, worin - bezogen auf (C3) - der Anteil der Struktureinheiten von Ethylen ≥ 9 Gew.-%, oft 9 bis 15 Gew.-%, bevorzugt ≥ 10 Gew.-%, beträgt.

Die in Gewichtsprozent (Gew.-%) angegebenen Anteile ergeben jeweils zusammen 100 Gew.-%.

Im Sinne der vorliegenden Erfindung sind unter den Struktureinheiten eines Monomers in einem (Co)Polymer die von dem einpolymerisierten Monomer abgeleiteten Struktureinheiten zu verstehen.

Der Begriff "hitzesterilisierbar" bedeutet, dass entsprechende Materialien einer Sterilisation bei erhöhten Temperaturen, vorzugsweise einer Dampfsterilisation unterzogen werden können. Mit der Sterilisation bezeichnet man Verfahren, durch die Materialien und Gegenstände von lebenden Mikroorganismen befreit werden. Den damit erreichten Zustand der Materialien und Gegenstände bezeichnet man als "steril". Bei der Dampfsterilisation der befüllten oder unbefüllten medizinischen Verpackungen verwendet man heißen Wasserdampf zur Sterilisation, welche typischerweise in einem Autoklaven durchgeführt wird. Dabei werden die medizinischen Verpackungen vorzugsweise 20 Minuten auf 121 °C bei 2 bar Druck im Wasserdampf erhitzt. Die Luft im Inneren des Autoklaven wird dabei vollständig durch Wasserdampf ersetzt.

Der Begriff "Mehrschichtfolie" bezieht sich auf thermoplastische Materialien in mehreren coextrudierten Polymerschichten, die miteinander zu einer Folie in Form einer laufenden Bahn oder eines Schlauchs verbunden sind.

Der Begriff "Impact Modifier" bezeichnet polymere Materialien, wie z.B. Styrol-Blockcopolymer Elastomere, Polyethylen-Elastomere und Polypropylen-Elastomere, die durch Einmischung im Schmelzezustand die Schlagzähigkeit des den Impact Modifier umgebenden Polymers verbessern.

Der Begriff "Schlagzähigkeit" bezeichnet die Eigenschaft eines Werkstoffes einer dynamischen Belastung zu wiederstehen. Nach der Norm DIN EN ISO 180:2013-08 kann die Izod-Schlagzähigkeit von Kunststoffen unter festgelegten Bedingungen gemessen werden.

### Erste Polymerschicht (A)

Die erste Polymerschicht (A) der erfindungsgemäßen Mehrschichtfolie stellt definitionsgemäß die Polymerschicht dar, welche bei Verarbeitung der Folie zu einer Verpackung, welche vorzugsweise ein Beutel ist, auf der Außenseite der Verpackung befindlich ist. Demnach ist sie bei der Weiterverarbeitung der Folie zu Verpackungen im direkten Kontakt mit der Oberfläche des Schweißwerkzeuges und benötigt deshalb vorzugsweise eine hohe Schmelz- bzw. Erweichungstemperatur, die bevorzugt oberhalb von 125°C, besonders bevorzugt zwischen 127°C und 150°C, ganz besonders bevorzugt zwischen 130°C und 145°C liegt.

Die erste Polymerschicht (A) enthält mindestens ein, vorzugsweise ein, Polypropylen-Homopolymer, welches mit mindestens einem, vorzugsweise einem, Impact Modifier modifiziert ist.

Bevorzugt besteht die erste Polymerschicht (A) aus mindestens einem, vorzugsweise einem, Polypropylen-Homopolymer, welches mit mindestens einem, vorzugsweise einem, Impact Modifier modifiziert ist.

Weiterhin bevorzugt enthält die erste Polymerschicht (A) ein Polypropylen-Homopolymer, welches mit einem Impact Modifier modifiziert ist.

Die erste Polymerschicht (A) enthält (oder besteht aus) mindestens ein, vorzugsweise ein, Polypropylen-Homopolymer, welches zur Verbesserung der (Kälte)Schlagzähigkeit generell mit 1 bis 30 Gew.-%, bevorzugt mit 2 bis 20 Gew.-%, besonders bevorzugt 2 bis 10 Gew.-%, insbesondere 3 bis 5 Gew.-%, mindestens eines Impact Modifiers modifiziert ist.

Die Herstellung von Polypropylen-Homopolymeren ist bekannt. Ferner sind Polypropylen-Homopolymere kommerziell erhältlich z.B. von Lyondell Basell Corporation, USA.

Bevorzugt enthält (oder besteht aus) die erste Polymerschicht (A) ein Polypropylen-Homopolymer, welches mit mindestens einem Impact Modifier, ausgewählt aus der Gruppe der Styrol-Blockcopolymere, wie z. B. Styrol-Ethylen-Butylen-Styrol-Blockcopolymere (SEBS), Styrol-Ethylen-Propylen-Styrol-Blockcopolymer (SEPS), Styrol-Isopren-Styrol-Blockcopolymer (SIS), und Styrol-Butadien-Styrol-Blockcopolymer (SBS), bevorzugt SEBS und SEPS, insbesondere SEBS, und/oder aus der Gruppe der Copolymere von Ethylen mit mindestens einem alpha-Olefin enthaltend 4 bis 16, bevorzugt 4 bis 12, besonders bevorzugt 4 bis 8 Kohlenstoffatome, wie z.B. Ethylen-Butylen-Copolymere und/oder Ethylen-Octen-Copolymere Ethylen, modifiziert ist.

Besonders bevorzugt enthält (oder besteht aus) die erste Polymerschicht (A) 90 bis 98 Gew.-%, insbesondere 95 bis 97 Gew.-%, eines Polypropylen-Homopolymers und 2 bis 10 Gew.-%, insbesondere 3 bis 5 Gew.-%, eines Styrol-Blockcopolymers und/oder eines Copolymers von Ethylen mit mindestens einem alpha-Olefin enthaltend 4 bis 12, bevorzugt 4 bis 8 Kohlenstoffatome.

In einer bevorzugten Ausführungsform enthält (oder besteht aus) die erste Polymerschicht (A) 95 bis 97 Gew.-% eines Polypropylen-Homopolymers und 3 bis 5 Gew.-% eines Styrol-Ethylen/Butylen-Blockcopolymers.

Die Gewichtsangaben für die Komponenten der ersten Polymerschicht (A) beziehen sich auf das Gesamtgewicht der ersten Polymerschicht (A).

### Zweite Polymerschicht (B)

Die zweite Polymerschicht (B) stellt definitionsgemäß die Polymerschicht dar, welche bei Verarbeitung der erfindungsgemäßen Mehrschichtfolie zu einer Verpackung, welche vorzugsweise ein Beutel ist, auf der Innenseite der Verpackung befindlich ist. Diese Polymerschicht ist dafür zuständig, dass die Verpackung durch Verschweißen dicht verschlossen werden kann. Die zweite Polymerschicht (B) der Folie muss mit sich selbst und mit entsprechend eingelegten Portelementen sicher und mit möglichst geringer Temperatur und Schweißzeit verschweißbar und trotzdem bei Temperaturen von mehr als 121°C hitzesterilisierbar sein. Eine niedrige Schweißtemperatur ist besonders wichtig, um die Folienstruktur möglichst wenig mit Gefügespannungen zu belasten. Demnach liegt die Schmelz- bzw. Erweichungstemperatur der zweiten Polymerschicht (B) im Allgemeinen oberhalb von 121°C, bevorzugt bei 122°C bis 135°C, besonders bevorzugt bei 124°C bis 130°C, in jedem Fall aber unterhalb der Schmelz- bzw. Erweichungstemperatur der ersten Polymerschicht (A).

Die zweite Polymerschicht (B) der erfindungsgemäßen Mehrschichtfolie enthält (oder besteht aus)
die Komponenten B1), B2) und B3) in folgenden Anteilen (jeweils bezogen auf (B)): B1) 51 bis 68 Gew.-%, bevorzugt 55 bis 67 Gew.-%, besonders bevorzugt 56 bis 66 Gew.-%;
B2) 12 bis 22 Gew.-%, bevorzugt 13 bis 21 Gew.-%, besonders bevorzugt 14 bis 20 Gew.-%;
B3) 15 bis 35 Gew.-%, bevorzugt 17 bis 32 Gew.-%, besonders bevorzugt 18 bis 30 Gew.-%.

### Komponente B1)

Komponente B1) ist mindestens ein, vorzugsweise ein, Polypropylen-Terpolymer. Der Begriff "Terpolymer" kennzeichnet ein Copolymer, welches aus drei verschiedenen Monomeren hergestellt ist.

Der Begriff "Polypropylen-Terpolymer" bezeichnet eine mit zwei zusätzlichen CoMonomeren im Polymerisationsprozess modifizierte Polypropylen-Molekülkette. Bevorzugte zusätzliche Co-Monomere sind Ethylen und/oder mindestens ein C₄-C₁₂ α-Olefin, bevorzugt Ethylen und ein C₄-C₁₂ α-Olefin, besonders bevorzugt Ethylen und ein C₄-C₈ α-Olefin, ganz besonders bevorzugt Ethylen und 1-Buten.

Bevorzugt ist B1) ein Terpolymer von Propylen, Ethylen und einem C₄-C₁₂ α-Olefin, worin der Anteil von Ethylen vorzugsweise 1 bis 4 Gew.-% und der Anteil des C₄-C₁₂ α-Olefins, bevorzugt C₄-C₈ α-Olefins, insbesondere 1-Buten, vorzugsweise 9 bis 12 Gew.-%, beträgt, jeweils bezogen auf (B1).

Die Gewichtsanteile beziehen sich jeweils auf die einpolymerisierten Struktureinheiten der Monomere in das Terpolymer (B1).

Ganz besonders bevorzugt ist das Polypropylen-Terpolymer (Komponente B1)) aufgebaut aus Struktureinheiten von Propylen, Ethylen und Butylen.

Die Monomere sind in dem Polypropylen-Terpolymer (= Komponente B1) im Allgemeinen statistisch eingebaut, d.h. Polypropylen-Terpolymer B1) ist üblicherweise ein statistisches Polypropylen-Terpolymer.

Das Polypropylen-Terpolymer B1) ist zur Verbesserung der Schlagzähigkeit, besonders bei tiefen Temperaturen, mit den Komponenten B2) und B3), die als Impact Modifier fungieren, modifiziert.

### Komponente B2)

Komponente B2) ist mindestens ein, bevorzugt ein, Styrol-Blockcopolymer (SBC) Elastomer.

Der Begriff "Styrol-Blockcopolymer Elastomer" bezeichnet synthetische thermoplastische Elastomere auf Basis von Styrol-Blockcopolymeren zur Schlagzähmodifikation von Polypropylen.

Das mindestens eine Styrol-Blockcopolymer (SBC) Elastomer B2) ist bevorzugt ausgewählt aus der Gruppe bestehend aus: Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS), Styrol-Isopren-Styrol-Blockcopolymer (SIS) und Styrol-Butadien-Styrol-Blockcopolymer (SBS), und besonders bevorzugt SEBS und SEPS, insbesondere SEBS.

Es ist auch möglich das Styrol-Blockcopolymer (SBC) Elastomer teilweise durch ein oder mehrere thermoplastische Elastomere auf Olefinbasis (TPE-O) zu ersetzen (Anteil TPE-O: maximal 45 Gew.-%, bevorzugt 20 bis 30 Gew.-%).

Bevorzugt ist Komponente B2) ein Styrol-Blockcopolymer (SBC) Elastomer, welches keine Anteile eines thermoplastischen Elastomere auf Olefinbasis enthält.

### Komponente B3)

Komponente B3) ist mindestens ein, vorzugsweise ein, Propylen-Ethylen-(Block)Copolymer, worin - bezogen auf (B3) - der Anteil der Struktureinheiten von Ethylen ≥ 9 Gew.-%, oft 9 bis 15 Gew.-%, bevorzugt ≥ 10 Gew.-%, oft bevorzugt 10 bis 12 Gew.-%, beträgt.

Propylen-Ethylen-Copolymere B3) werden oftmals auch als "heterophasische" Copolymere bezeichnet. Im Allgemeinen ist das Propylen-Ethylen-Copolymer B3) ein Propylen-Ethylen-Blockcopolymer, welches Ethylen- und Propylen-Polymerblöcke aufweist und dadurch bedingt eine heterogene Phase (Morphologie) ausbildet. Heterophasische Propylen-Ethylen-(Block)Copolymere B3) unterscheiden sich sowohl in ihrer Zusammensetzung (Anteil der Ethylen-Struktureinheiten ≥ 9 Gew.-%) als auch in ihren Eigenschaften von - nicht erfindungsgemäß als Komponente B3) verwendeten - Propylen-Ethylen-Copolymeren mit statistischer Verteilung der beiden Monomeren, worin der Anteil der Struktureinheiten von Ethylen im Allgemeinen maximal 8 Gew.-%, oftmals maximal 5 Gew.-% beträgt. Derartige statistische Propylen-Ethylen-Copolymere bilden üblicherweise eine homogene Phase (Morphologie) aus.

Vorzugsweise enthält (oder besteht aus) die zweite Polymerschicht (B) gemäß der Erfindung: ein Polypropylen-Terpolymer (Komponente B1) aufgebaut aus Struktureinheiten von Propylen, Ethylen und Butylen, ein Styrol-Ethylen-Butylen-Styrol-Blockcopolymer (SEBS) (Komponente B2), und ein Propylen-Ethylen-(Block)Copolymer (Komponente B3).

Besonders bevorzugt enthält (oder besteht aus) die zweite Polymerschicht (B) gemäß der Erfindung:
B1) 55 bis 67 Gew.-%, bevorzugt 56 bis 66 Gew.-%, eines Polypropylen-Terpolymers aufgebaut aus Struktureinheiten von Propylen, Ethylen und Butylen;
B2) 13 bis 21 Gew.-%, bevorzugt 14 bis 20 Gew.-%, eines Styrol-Ethylen-Butylen-Styrol-Blockcopolymers (SEBS); und
B3) 17 bis 32 Gew.-%, bevorzugt 18 bis 30 Gew.-%, eines Propylen-Ethylen-(Block)Copolymers (Komponente B3).

Die Gewichtsangaben für die Komponenten B1), B2) und B3) der zweiten Polymerschicht (B) beziehen sich auf das Gesamtgewicht der zweiten Polymerschicht (B).

### Mittlere Polymerschicht (C)

Die mittlere Polymerschicht (C) hat den größten Massenanteil (mindestens 50 Gew.-%) der Mehrschichtfolie, bevorzugt 60 bis 95 Gew.-%, besonders bevorzugt 70 bis 90 Gew.-%, ganz besonders bevorzugt 75 bis 85 Gew.-% der gesamten Mehrschichtfolie und dient zur Verbesserung der Schlagzähigkeit der gesamten Struktur.

Die mittlere Polymerschicht (C) der erfindungsgemäßen Mehrschichtfolie enthält (oder besteht aus) die Komponenten C1), C2) und C3) in folgenden Anteilen (jeweils bezogen auf (C)):
C1) 20 bis 30 Gew.-%, bevorzugt 21 bis 30 Gew.-%, besonders bevorzugt 22 bis 27 Gew.-%;
C2) 15 bis 30 Gew.-%, bevorzugt 15 bis 25 Gew.-%, besonders bevorzugt 17 bis 23 Gew.-%,
C3) 40 bis 65 Gew.-%, bevorzugt 45 bis 65 Gew.-%, besonders bevorzugt 50 bis 60 Gew.-%, ganz besonders bevorzugt 52 bis 57 Gew.-%.

### Komponente C1)

Komponente C1) ist mindestens ein, vorzugsweise ein, Styrol-Blockcopolymer (SBC) Elastomer.

Styrol-Blockcopolymer (SBC) Elastomer C1) ist wie Komponente B2) definiert, so dass auf die entsprechenden Ausführungen zu Komponente B2) verwiesen wird.

### Komponente C2)

Komponente C2) ist mindestens ein, vorzugsweise ein, Polyethylen-Elastomer, welches ein Copolymer von Ethylen mit einem alpha-Olefin enthaltend 4 bis 12, bevorzugt 4 bis 8 Kohlenstoffatome ist.

Der Anteil der Struktureinheiten des alpha-Olefins - bezogen auf (C2) -beträgt bevorzugt 20 bis 30 Gew.-%.

Besonders bevorzugt ist das Polyethylen-Elastomer C2) ein Ethylen-Butylen-Copolymer und/oder ein Ethylen-1-Octen-Copolymer, insbesondere ein Ethylen-1-Octen-Copolymer.

### Komponente C3)

Komponente C3) ist mindestens ein, vorzugsweise ein, Propylen-Ethylen-(Block)Copolymer, worin - bezogen auf (C3) - der Anteil der Struktureinheiten von Ethylen ≥ 9 Gew.-%, oft 9 bis 15 Gew.-%, bevorzugt ≥ 10 Gew.-%, oft bevorzugt 10 bis 12 Gew.-%, beträgt.

Propylen-Ethylen-(Block)Copolymer C3) ist wie Komponente B3) definiert, so dass auf die entsprechenden Ausführungen zu Komponente B3) verwiesen wird.

Vorzugsweise enthält (oder besteht aus) die mittlere Polymerschicht (C) gemäß der Erfindung ein Styrol-Ethylen-Butylen-Styrol-Blockcopolymer (SEBS) (Komponente C1)), ein Ethylen-1-Octen-Copolymer (Komponente C2)), und ein Propylen-Ethylen-(Block)Copolymer (Komponente C3)).

### Besonders bevorzugt enthält (oder besteht aus) die mittlere Polymerschicht (C) gemäß der Erfindung

C1) 21 bis 30 Gew.-%, bevorzugt 22 bis 27 Gew.-%, eines Styrol-Ethylen-Butylen-Styrol-Blockcopolymers (SEBS);
C2) 15 bis 25 Gew.-%, bevorzugt 17 bis 23 Gew.-%, eines Ethylen-Octen-Copolymers; und
C3) 45 bis 65 Gew.-%, bevorzugt 50 bis 60 Gew.-%, eines Propylen-Ethylen-(Block)Copolymers (Komponente C3)).

Die Gewichtsangaben für die Komponenten C1), C2) und C3) der mittleren Polymerschicht (C) beziehen sich auf das Gesamtgewicht der mittleren Polymerschicht (C).

### Funktionsschicht (D)

Die hitzesterilisierbare Mehrschichtfolie gemäß der Erfindung kann ferner eine zusätzliche Funktionsschicht D) als Außenschicht umfassen, die sich benachbart zu der ersten Polymerschicht (A) auf der äußeren Seite von (A) - d.h. auf der anderen Seite von (A) gegenüberliegend zu der mit Polymerschicht (C) - befindet.

Funktionsschicht (D) bewirkt vorzugsweise, dass die hitzesterilisierbare Mehrschichtfolie, sowie daraus hergestellte Verpackungen wie medizinische Beutel oder daraus hergestellte Folienschläuche gasdicht und/oder wasserdicht sind. Funktionsschicht D) enthält, bevorzugt besteht aus, mindestens ein, bevorzugt ein, Material ausgewählt aus der Gruppe bestehend aus: Ethylen-Vinylalkohol-Copolymeren, Polyvinylalkoholen, Polyamiden, flüssigkristalllinen Polymeren (LCP), aromatischen Polyestern, bevorzugt Terephthalsäure-Polyestern, besonders bevorzugt Polyethylentherephthalaten (PET), Siliziumoxid (SiOₓ), Aluminiumoxid (AlOₓ) und Polymeren auf Acyrylatbasis.

Bevorzugt besteht die Funktionsschicht (D) aus PET/SiOₓ.

Die Funktionsschicht (D) weist vorzugsweise eine Schichtdicke von 5 bis 25 µm, insbesondere von 10 bis 20 µm, auf.

Durch eine Funktionsschicht (D) aus PET/SiOₓ wird die Gasbarriere (z.B. die Sauerstoffbarriere) der hitzesterilisierbaren Mehrschichtfolie gemäß der Erfindung signifikant verbessert, so dass die Folie auch gut für die Lagerung von sauerstoffempfindlichen Inhaltsstoffen geeignet ist.

Durch eine SiOₓ/PET-Funktionsschicht (D) kann die Sauerstoffbarriere (oxygen transmission rate (OTR)) der hitzesterilisierbaren Mehrschichtfolie gemäß der Erfindung um den Faktor 1000 auf OTR-Werte < 1 cm³/(m² x day) ASTM F1927 (23°C, 50% r.H.) abgesenkt werden.

### Mehrschichtfolie

Bevorzugt besteht die hitzesterilisierbare Mehrschichtfolie gemäß der Erfindung aus den Polymerschichten (A), (B) und (C).

Die Mehrschichtfolie kann in jeder der Polymerschichten (A), (B) und (C) übliche Additive und/oder Verarbeitungshilfsmittel, die für den Verwendungszweck der Mehrschichtfolie geeignet sind, in üblichen Mengen enthalten.

Bevorzugte Additive sind Antioxidantien und thermische Stabilisatoren (phosphitische und phenolische Stabilisatoren wie Irgafos^{®} 168, Irgafos P-EPQ , Irganox^{®} 1076 oder Irganox 1010), sowie Säurefänger wie z.B. DHT-4A^{®}**,** synthetischer Hydrotalcit (SHT) und Magnesiumoxid (MgO).

Bevorzugt enthält die hitzesterilisierbare Mehrschichtfolie aus den Polymerschichten (A), (B) und (C) gemäß der Erfindung mindestens ein(en) Antioxidans, thermischen Stabilisator und/oder Säurefänger, bevorzugt in einer Gesamtmenge von < 3000 ppm, bezogen auf die gesamte Mehrschichtfolie.

Bevorzugt haften die Polymerschichten (A), (B) und (C) aneinander, ohne dass ein Haftvermittler eingesetzt wird, d.h. die erfindungsgemäße Mehrschichtfolie aus den Polymerschichten (A), (B) und (C) enthält bevorzugt keinen Haftvermittler. Ferner enthält bevorzugt zumindest die zweite Polymerschicht (B) keine weiteren Additive und/oder Verarbeitungshilfsmittel (z.B. Modifikatoren oder Weichmacher, wie z.B. Mineralöl), wobei ganz besonders bevorzugt keine der Polymerschichten (A), (B), und (C) weitere Additive und/oder Verarbeitungshilfsmittel, zusätzlich zu den vorstehend als bevorzugt genannten Additiven, enthält. Demnach findet keine oder kaum eine Beeinflussung des Medikaments oder der medizinischen Lösung durch die erfindungsgemäße Mehrschichtfolie als Packmittel während der Sterilisation und der Lagerung statt.

Im Fall einer erfindungsgemäßen Mehrschichtfolie bestehend aus den Polymerschichten (A), (B), (C) und der Funktionsschicht (D) enthält die Mehrschichtfolie im Allgemeinen zusätzlich - zu den vorstehend als bevorzugt genannten Additiven - einen Haftvermittler bzw. Haftkleber.

Die Schichtdicke der ersten Polymerschicht (A) beträgt im Allgemeinen 5 bis 15 Gew.-%, bevorzugt 7 bis 13 Gew.-%, besonders bevorzugt 7,5 bis 10 Gew.-%, der gesamten Folienstärke der erfindungsgemäßen Mehrschichtfolie.

Die Schichtdicke der zweiten Polymerschicht (B) beträgt im Allgemeinen 5 bis 15 Gew.-%, bevorzugt 7 bis 13 Gew.-%, besonders bevorzugt 7,5 bis 10 Gew.-%, der gesamten Folienstärke der erfindungsgemäßen Mehrschichtfolie.

Die mittlere Polymerschicht (C) hat den größten Anteil (bevorzugt mindestens 70 Gew.-% der gesamten Folienstärke) der erfindungsgemäßen Mehrschichtfolie und dient zur Verbesserung der Schlagzähigkeit der gesamten Struktur.

In einer Mehrschichtfolie bestehend aus (A), (B) und (C) beträgt die Schichtdicke der mittleren Polymerschicht (C) im Allgemeinen 70 bis 85 Gew.-%, bevorzugt 74 bis 80 Gew.-%.

Falls vorhanden, beträgt die Schichtdicke der optionalen Funktionsschicht (D) bevorzugt 2,5 bis 12,5 Gew.-%, besonders bevorzugt 5 bis 10 Gew.-%, der gesamten Folienstärke der erfindungsgemäßen Mehrschichtfolie.

Die gesamte Folienstärke (= Dicke) der erfindungsgemäßen Mehrschichtfolie beträgt bevorzugt 50 bis 500 µm, besonders bevorzugt 100 bis 400 µm, ganz besonders bevorzugt 150 bis 300 µm.

Die gesamte Folienstärke bzw. Dicke einer erfindungsgemäßen Mehrschichtfolie bestehend aus den Polymerschichten (A), (B) und (C) beträgt bevorzugt 50 bis 500 µm, besonders bevorzugt 100 bis 400 µm, ganz besonders bevorzugt 150 bis 300 µm.

Besonders bevorzugt ist eine erfindungsgemäße Mehrschichtfolie, die aus den Polymerschichten (A), (B) und (C) besteht, und dadurch gekennzeichnet ist, dass die gesamte Folienstärke der Mehrschichtfolie 50 bis 500 µm, besonders bevorzugt 100 bis 400 µm, beträgt, und - jeweils bezogen auf die gesamte Folienstärke der Mehrschichtfolie -
die Schichtdicke der ersten Polymerschicht (A) 5 bis 15 Gew.-%, bevorzugt 7 bis 13 Gew.-%,
die Schichtdicke der zweiten Polymerschicht (B) 5 bis 15 Gew.-%, bevorzugt 7 bis 13 Gew.-%; und
die Schichtdicke der mittleren Polymerschicht (C) 70 bis 85 Gew.-%, bevorzugt 74 bis 80 Gew.-%; beträgt; und
die Anteile von (A), (B) und (C) jeweils zusammen 100 Gew.-% ergeben.

### Verfahren zur Herstellung der Mehrschichtfolie

Ein weiterer Gegenstand der Erfindung ist ein Verfahren zur Herstellung der erfindungsgemäßen Mehrschichtfolie, wobei die erste Polymerschicht (A), die mittlere Polymerschicht (C), und die zweite Polymerschicht (B) coextrudiert werden.

Bei der Coextrusion werden die Kunststoffschmelzen der Polymerschichten (A), (B) und (C) vor dem Verlassen der Profildüse eines Extruders zu der erfindungsgemäßen Mehrschichtfolie zusammengeführt.

Oftmals ist der Extrusionsprozess zweistufig. In einem ersten Schritt werden die für die einzelnen Polymerschichten verwendeten Materialien in Extrudern, vorzugsweise parallelen Doppelschneckenextrudern (Compoundern), Heiz-Kühl-Mischern oder Pelletierpressen gemischt und kompaktiert. Dann werden die Kunststoffschmelzen der Polymerschichten (A), (B) und (C) in einem anderen, direkt gekoppelten oder räumlich und zeitlich getrennten Extruder vor dem Verlassen der Profildüse zu der erfindungsgemäßen Mehrschichtfolie zusammengeführt.

Bevorzugt wird die durch das erfindungsgemäße Verfahren erhaltene Mehrschichtfolie mit Wasser schockgekühlt.

Durch die Coextrusion kann die erfindungsgemäße Mehrschichtfolie in Form einer flachen Folie (Flachfolienverfahren, z.B. bei Verwendung einer Breitschlitzdüse) oder eines Folienschlauches (Blasfolienverfahren, z.B. Flutung des Innenraums des Folienschlauches mit - vorzugsweise steril gefilterter - Luft) erhalten werden, wobei im Fall eines Folienschlauches die Außenseite aus der ersten Polymerschicht (A) und die Innenseite aus der zweiten Polymerschicht (B) besteht.

Auf die durch das erfindungsgemäße Verfahren erhaltene Mehrschichtfolie kann in einem weiteren Verfahrensschritt die optionale Funktionsschicht (D) - z.B. durch Heißlaminieren oder bevorzugt durch Kaschieren - aufgebracht werden.

Gemäß einer besonderen Ausführungsform zur Herstellung eines kaschierten Mehrschichtfolienschlauches gemäß der Erfindung umfasst das erfindungsgemäße Verfahren die folgenden Schritte:
(a')) Herstellen eines Folienschlauches aus der erfindungsgemäßen Mehrschichtfolie durch ein Blasfolienverfahren, wobei der Innenraum des Folienschlauches mit - vorzugsweise steril gefilterter - Luft geflutet wird;
(b')) gegebenenfalls Abkühlen des in Verfahrensschritt (a') hergestellten Folienschlauches;
(c')) Beschichten des gegebenenfalls abgekühlten Folienschlauches mit einer Haftkleberadhäsivschicht auf mindestens einer Seite (erste Polymerschicht (A)) des Folienschlauches;
(d')) gegebenenfalls Trocknen des mit der Haftkleberadhäsivschicht versehenen Folienschlauches;
(e')) Kaschieren der mindestens einen mit der Haftkleberadhäsivschicht beschichteten Seite (erste Polymerschicht (A)) des Folienschlauches mit einer Funktionsschicht (D), insbesondere einer SiOx/PET-Funktionsschicht;
(f) gegebenenfalls Trocknen bzw. Aushärten des kaschierten Folienschlauches.

Gemäß dem erfindungsgemäßen Verfahren der vorgenannten Ausführungsform haften die beiden parallelen innenliegenden Seiten (= zweite Polymerschicht (B)) des Folienschlauches nach der Schmelz- bzw. Coextrusion des Folienschlauches vorzugsweise unmittelbar aufeinander, so dass eine Beschichtung der Außenseiten (erste Polymerschichten (A)) des Folienschlauches bei einem geschlossenen Innenraum des Folienschlauches möglich ist. Der dabei geschlossene Innenraum, der bei einer späteren Verwendung des resultierenden Folienschlauches aufgebläht wird, ist damit im Wesentlichen partikelfrei.

Bevorzugt wird bei dem erfindungsgemäßen Verfahren der vorgenannten Ausführungsform der Innenraum des Folienschlauches mit steril gefilterter Luft geflutet, so dass ein partikelarmer, kaschierter Mehrschichtfolienschlauch erhalten wird, der für medizinische Zwecke besonders gut geeignet ist.

Besonders bevorzugt wird zur Herstellung eines partikelarmen, kaschierten Mehrschichtfolienschlauches das vorgenannte erfindungsgemäße Verfahren in einem Reinraum durchgeführt.

In dem erfindungsgemäßen Verfahren gemäß obiger Ausführungsform wird vorzugsweise ein Haftvermittler verwendet, der eine vollständige Aushärtung bei Raumtemperatur nach ungefähr 2 Wochen, vorzugsweise 1 Woche, ermöglicht. In einer Wärmekammer kann die Aushärtung bei erhöhter Temperatur, vorzugsweise 30°C oder mehr, oftmals 40°C bis 60 °C, auch schneller erfolgen.

Geeignete Haftvermittler (Haftkleber, Adhäsivkleber oder Kaschierkleber) sind beispielsweise Isocyanate, Polyurethane, Poly(ethylacrylat/methacrylsäureester), Reinacrylatcopolymerisate, Vinylester-/Acrylat-Copolymerisate oder anorganischeorganische Hybridpolymere.

Bevorzugte Haftvermittler sind Zweikomponentensysteme, die lösemittelhaltig oder lösemittelfrei, und silanhaltig oder silanfrei sein können und optional zur Beschleunigung der Aushärtung mit einem zusätzlichen "Catalyst" verwendet werden können.

Geeignete lösemittelhaltige Zweikomponentensysteme sind zum Beispiel Polyurethan-Adhäsivkleber u.a. kommerziell erhältliche Systeme wie
- Dow ADCOTE^{™} 675A + ADCOTE^{™} 675C coreactant;
- Dow ADCOTE 811A + ADCOTE 811B coreactant;
- Dow ADCOTE E735A-75 + ADCOTE^{™} E735C2 coreactant:
- MORCHEM PS 241 AE + CS-97 coreactant,
- Henkel Loctite Liofol LA2798 + Henkel Loctite Liofol LA7371;
- Henkel LOCTITE HY 4070 2K-Hybridklebstoff.

Die vorgenannten Systeme können optional mit "Catalysts" eingesetzt werden u.a. solchen wie Dow Catalyst 9L10 (Polyisocyanat),Dow Catalyst 9L200 und Dow Catalyst F Adcote 40-3E, die kommerziell erhältlich sind.

Geeignete lösemittelfreie Zweikomponentensysteme sind zum Beispiel Polyurethan-Adhäsivkleber u.a. kommerziell erhältliche Systeme wie
- Dow MOR-FREE^{™} L 75-720 Adhesive
   + CR 88-720 or CR 88-721 or MOR-FREE^{™} C 79 S coreactant
- Dow MOR-FREE^{™} 203A Adhesive + MOR-FREE^{™} 200C coreactant
- Dow MOR-FREE^{™} L705 Adhesive + MOR-FREE^{™} C 79 or MOR-FREE^{™} C-102 coreactant.

Alternativ können auch Einkomponentensysteme,als Haftvermittler eingesetzt werden, die lösemittelhaltig oder lösemittelfrei, und silanhaltig oder silanfrei sein können und optional zur Beschleunigung der Aushärtung mit einem zusätzlichen "Catalyst" verwendet werden können.

Geeignete lösemittelfreie Einkomponentensysteme sind zum Beispiel Dow MOR-FREE^{™} ELM 415A (Polyurethan-Adhäsivkleber) oder SENOBOND^{®}-WB-FOLIENKASCHIERKLEBER FP NDC 375224, die kommerziell erhältlich sind.

Besonders bevorzugt wird der Adhäsivkleber so gewählt, dass er die Anforderungen von Pharmakopöe Limits, beispielsweise hinsichtlich von Migrationseigenschaften, einhält und vorzugsweise frei von organischen Lösungsmitteln ist.

Die Adhäsivschicht kann - je nach Verfahrensweise oder gewünschter Beschichtung - einseitig oder beidseitig auf den durch Coextrusion hergestellten Folienschlauch aufgetragen werden. Dieses kann beispielsweise durch Aufspritzen oder Aufrakeln erfolgen. Geeignet ist auch die Verwendung von wässrigen Lösungen der entsprechenden Adhäsivmittel.

Nach dem Auftragen dieser Adhäsivschichten kann der resultierende Folienschlauch gegebenenfalls getrocknet werden. Beispielsweise kann, wenn die Auftragung des Adhäsivs unter Verwendung von Wasser erfolgt, das Trocknen unter Verdunstung des des Wassers erfolgen. Die Schichtdicken der Haftkleberadhäsivschichten liegen vorzugsweise im Bereich von 1 bis 10 µm.

Erfindungsgegenstand ist außerdem die Verwendung der erfindungsgemäßen Mehrschichtfolie zur Herstellung einer medizinischen Verpackung, vorzugsweise eines medizinischen Beutels.

Die erfindungsgemäße medizinische Verpackung ist insbesondere als Behälter für mindestens ein Medikament geeignet, wobei aufgrund der speziell modifizierten Polymerschicht (C) die erfindungsgemäße Mehrschichtfolie insbesondere auch zur Verpackung und Lagerung von medizinischen Lösungen bei Minustemperaturen geeignet ist.

In einer bevorzugten Ausführungsform ist die erfindungsgemäße Verpackung in Kammern unterteilt, so dass sie als Behälter für mehrere Medikamente gleichzeitig genutzt werden kann. Dies ist beispielsweise bei solchen Medikamentenkombinationen von Relevanz, die zusammen verabreicht werden müssen, jedoch in Kombination nicht über längere Zeiträume stabil sind, oder bei festen Medikamenten, die in Form einer Lösung oder Suspension verabreicht werden, jedoch in der Lösung oder in der Suspension nicht über längere Zeiträume stabil sind. Durch getrennte Kammern lassen sich die Bestandteile der endgültigen Verabreichungsform getrennt aufbewahren und kurz vor der Verabreichung durch Öffnen der Trennstellen miteinander vermischen.

Ein Verfahren zur Herstellung einer erfindungsgemäßen medizinischen Verpackung, bevorzugt eines Beutels, umfasst die Schritte:
a) Bereitstellen mindestens einer erfindungsgemäßen hitzesterilisierbaren Mehrschichtfolie;
b) gegebenenfalls Bereitstellen eines oder mehrerer Portelemente und/oder Schläuche;
c) Formen einer medizinischen Verpackung, bevorzugt eines Beutels, aus der mindestens einen hitzesterilisierbaren Mehrschichtfolie, so dass die zweite Polymerschicht (B) die innere Fläche der medizinischen Verpackung, bevorzugt des Beutels, und die erste Polymerschicht (A) die äußere Fläche der medizinischen Verpackung, bevorzugt des Beutels, bildet;
d) gegebenenfalls Positionieren der Portelemente und/oder Schläuche zwischen den inneren Flächen an den Konturen der medizinischen Verpackung, bevorzugt des Beutels;
e) in-Kontakt-Bringen der inneren Flächen an den Konturen der medizinischen Verpackung, bevorzugt des Beutels, miteinander und mit gegebenenfalls dazwischen positionierten Portelementen und/oder Schläuchen;
f) Verschweißen der inneren Flächen an den Konturen der medizinischen Verpackung, bevorzugt des Beutels, miteinander und mit gegebenenfalls dazwischen positionierten Portelementen und/oder Schläuchen.

In Schritt a) wird die erfindungsgemäße Mehrschichtfolie vorzugsweise in Form einer Flachfolie oder einer Schlauchfolie bereitgestellt. Abhängig von der bereitgestellten Form der Folie kann sich das weitere Verfahren in bestimmten Einzelheiten unterscheiden. Der erhaltene partikelarme Folienschlauch kann durch zusätzliche Verfahrensschritte mit einer Funktionsschicht (D) z.B. einer SiOx/PET-Funktionsschicht kaschiert werden.

Abhängig von der Anwendung der erfindungsgemäßen medizinischen Verpackung, bevorzugt des Beutels, können bei dem Verfahren nach der Bereitstellung der erfindungsgemäßen Mehrschichtfolie optional in Schritt b) zusätzliche Elemente, wie beispielsweise Portelemente und/oder Schläuche bereitgestellt werden. Die Bereitstellung dieser Elemente ist beispielsweise dann sinnvoll, wenn die erfindungsgemäße medizinische Verpackung, bevorzugt der Beutel, als fester Bestandteil einer medizinischen Vorrichtung eingesetzt werden soll oder an eine medizinische Vorrichtung angeschlossen werden soll. Das Weglassen des Schritts b) kann beispielsweise sinnvoll sein, wenn die medizinische Verpackung, bevorzugt der Beutel, lediglich der Aufbewahrung eines Medikaments dient und zur Entnahme des Medikaments beispielsweise durch Aufreißen oder Durchstechen mit einer Kanüle beschädigt wird.

In Schritt c) wird die bereitgestellte erfindungsgemäße Mehrschichtfolie in die Form einer medizinischen Verpackung, bevorzugt eines Beutels, gebracht. Wenn in Schritt a) eine Schlauchfolie bereitgestellt wurde, kann das Formen der medizinischen Verpackung, bevorzugt des Beutels, beispielsweise nur das Zuschneiden der Schlauchfolie auf die gewünschte Länge beinhalten, da bereits die zweite Polymerschicht (B) die innere Fläche der Schlauchfolie und die erste Polymerschicht (A) die äußere Fläche der Schlauchfolie bildet. Wenn in Schritt a) eine Flachfolie bereitgestellt wurde, kann in Schritt c) die medizinische Verpackung, bevorzugt der Beutel, beispielsweise aus einem Stück Mehrschichtfolie geformt werden, indem dieses Stück in eine spiegelsymmetrische Form zugeschnitten wird und entlang der Spiegelachse umgeklappt wird, sodass die Ränder der Folie sich deckungsgleich aufeinanderlegen, mit der zweiten Polymerschicht (B) auf der Innenseite. Alternativ kann die erfindungsgemäße medizinische Verpackung, bevorzugt der Beutel, beispielsweise aus zwei Stücken Flachfolie geformt werden, indem die zwei Stücke zueinander spiegelsymmetrisch zugeschnitten werden und deckungsgleich aufeinandergelegt werden, mit der zweiten Polymerschicht (B) auf der Innenseite. Bei dem Zuschneiden sind rechteckige Formen besonders bevorzugt, da hierdurch der Materialverlust am geringsten und die Verarbeitbarkeit am einfachsten ist. Allerdings sind auch andere Formen möglich, sodass beispielsweise eine medizinische Verpackung, bevorzugt ein Beutel, mit einer ästhetischen Form hergestellt werden kann, die für Kinder ansprechend ist und diese von der eigentlichen Verabreichung eines Medikaments ablenkt.

Abhängig davon, ob in Schritt b) zusätzliche Elemente wie Portelemente und/oder Schläuche bereitgestellt wurden, können diese Elemente in Schritt d) zwischen den inneren Flächen an den Konturen der geformten medizinischen Verpackung, bevorzugt des Beutels, positioniert werden. Im Fall einer Schlauchfolie ist hiermit das Einlegen der zusätzlichen Elemente in die Öffnungen der Schlauchfolie gemeint. Hierbei können die Elemente nur auf zwei einander gegenüberliegenden Seiten der medizinischen Verpackung, bevorzugt des Beutels, positioniert werden. Im Fall einer Flachfolie ist das Einlegen der zusätzlichen Elemente zwischen die in Schritt c) deckungsgleich aufeinander gelegten Ränder des einen oder der mehreren Flachfolienstücke gemeint. Hierbei können die Elemente an beliebigen Stellen entlang der Ränder positioniert werden, bevorzugt höchstens an zwei gegenüberliegenden Rändern.

In Schritt e) werden die inneren Flächen der geformten medizinischen Verpackung, bevorzugt des Beutels, an dessen Konturen miteinander und mit den gegebenenfalls zwischen den inneren Flächen befindlichen zusätzlichen Elementen in Kontakt gebracht, damit diese in Schritt f) durch Zuführen von Hitze und gegebenenfalls mechanischem Druck zusammen verschweißt werden können. Bei dem Verschweißen ist die Temperatur bevorzugt so gewählt, dass sie über dem Schmelz- bzw. Erweichungspunkt der zweiten Polymerschicht (B), jedoch unter dem Schmelz- bzw. Erweichungspunkt der ersten Polymerschicht (A) liegt. Hierdurch kann gewährleistet werden, dass die zweite Polymerschicht (B) an den Konturen der medizinischen Verpackung, bevorzugt des Beutels, schmilzt und diesen dadurch fest und fluiddicht verschließt, während die erste Polymerschicht (A) ihre Form behält und dadurch die Stabilität der medizinischen Verpackung, bevorzugt des Beutels, erhält.

Ein wichtiges Kriterium für den Einsatz der erfindungsgemäßen Mehrschichtfolie als Primärpackmittel für medizinische Lösungen ist die Sperrwirkung gegen Flüssigkeitsverlust. Durch einen solchen Flüssigkeitsverlust entsteht eine Aufkonzentrierung der Lösungs-Wirkstoffe, der bestimmte Werte nicht überschreiten darf. Der Flüssigkeitsverlust während der Lagerung entscheidet unter anderem über die Haltbarkeitsdauer des Produktes. Die Formulierung der erfindungsgemäßen Mehrschichtfolie ist so gewählt, dass bei guter Schlagzähigkeit eine sehr gute Wasserdampf-Barriere erzielt wird.

Die erfindungsgemäße hitzesterilisierbare Mehrschichtfolie zeichnet sich dadurch aus, dass sie mit einem thermisch dauerbeheizten Schweißverfahren auch mit Portelementen sicher verschweißbar ist, ohne Weichmacher auskommt, medizinische Lösungen kaum beeinflusst und eine hohe Wasserdampfbarriere aufweist. Gleichzeitig weist die erfindungsgemäße Mehrschichtfolie eine signifikant verbesserte Kälteschlagzähigkeit auch bei Minustemperaturen auf. Mit einer zusätzlichen Funktionsschicht (D), insbesondere einer SiOx/PET-Funktionsschicht, versehene erfindungsgemäße Mehrschichtfolien weisen eine deutlich verbesserte Gasbarriere auf, die auch eine Lagerung von sauerstoffempfindlichen Inhaltsstoffen erlaubt.

Nachfolgend wird die Erfindung anhand von Beispielen näher erläutert, ohne sie dadurch einzuschränken.

### Beispiel 1:

Erste Polymerschicht (A):
- 97 Gew.-% Moplen^{®} HP525J von Lyondell Basell Corp., USA/ Polypropylen-Homo-polymer
- 3 Gew.-% Tuftec^{®} H1062 von Asahi Kasei, Japan/ Styrol-Ethylen/Butylen-Block-copolymer

Die genannte Formulierung wurde in einem separaten Compoundierschritt im Schmelzezustand gemischt und für den weiteren Einsatz granuliert.

Zweite Polymerschicht (B):
- 65 Gew.-% Bormed^{®} TD109CF von Borealis, Österreich/ Polypropylen-Terpolymer
- 15 Gew.-% Tuftec^{®} H1062 von Asahi Kasei, Japan/ Styrol-Ethylen/Butylen-Block-copolymer
- 20 Gew.% Bormed^{®} SC 820 CF-11 von Borealis, Österreich/ heterophasisches Propylen-Copolymer

Die genannte Formulierung wurde in einem separaten Compoundierschritt im Schmelzezustand gemischt und für den weiteren Einsatz granuliert.

Mittlere Polymerschicht (C):
- 55 Gew.% Bormed^{®} SC 820 CF-11 von Borealis, Österreich/ heterophasisches Propylen-Copolymer
- 25 Gew.-% Tuftec^{®} H1062 von Asahi Kasei, Japan/ Styrol-Ethylen/Butylen-Blockcopolymer
- 20 Gew.-% Engage^{®} 8003 von Dow Chemical Company, USA/ Ethylen-Octen-Polyolefin Elastomer

Die genannte Formulierung wurde in einem separaten Compoundierschritt im Schmelzezustand gemischt und für den weiteren Einsatz granuliert.

Die Schmelzen aus den granulierten Compounds der ersten Polymerschicht (A), der mittleren Polymerschicht (C) und der zweiten Polymerschicht (B) wurden mit für Polypropylen üblichen Prozessparametern (Temperatur 180 bis 230°C) auf einer Blasfolienanlage mit Wasserkühlung coextrudiert und eine Mehrschicht-Folie in Form eines Folienschlauchs, dessen Innenraum mit steril gefilterter Luft geflutet wurde, wurde erhalten.

Die Folie wurde mit einer Gesamtdicke von 200 µm gefertigt, wobei die erste Polymerschicht (A) und zweite Polymerschicht (B) jeweils eine Dicke von 15 µm und die mittlere Polymerschicht (C) eine Dicke von 170 µm aufweist.

Die hergestellte Folie ist heißdampfsterilisierbar und mit 125°C temperierten Schweißwerkzeugen fest verschweißbar.

### Beispiel 2:

Ein gemäß Beispiel 1 hergestellter Folienschlauch wurde zusätzlich beidseitig mit einer Funktionsschicht (D) aus SiOx/PET (Techbarrier T von Mitsubishi) in einer Schichtdicke von jeweils 15 µm µm versehen.

Zunächst wurde auf den flachgelegten Folienschlauch beidseitig ein Zweikomponentenkleber (Dow ADCOTE 811A + ADCOTE 811B coreactant, sowie Dow Catalyst 9L10, erhältlich von Dow Chemical) aufgetragen und dann wurde der mit dem Kleber versehene Folienschlauch beidseitig mit der Funktionsschicht kaschiert.

Die hergestellte Folie ist heißdampfsterilisierbar und bereits mit 125°C temperierten Schweißwerkzeugen fest verschweißbar.

### Beispiel 3 (nicht erfindungsgemäß):

Erste Polymerschicht (A):
- 97 Gew.-% Moplen^{®} HP525J von Lyondel IBasell Corp., USA/ Polypropylen-Homopolymer
- 3 Gew.-% Tuftec^{®} H1062 von Asahi Kasei, Japan/ Styrol-Ethylen/Butylen-Blockcopolymer

Die genannte Formulierung wurde in einem separaten Compoundierschritt im Schmelzezustand gemischt und für den weiteren Einsatz granuliert.

Zweite Polymerschicht (B):
- 70 Gew.-% Bormed^{®} TD109CF von Borealis, Österreich/ Polypropylen-Terpolymer
- 15 Gew.-% Tuftec^{®} H1062 von Asahi Kasei, Japan/ Styrol-Ethylen/Butylen-Blockcopolymer
- 15 Gew.-% Bormed^{®} RD804 CF-11, Borealis, Österreich/ statistisches Propylen-Copolymer

Die genannte Formulierung wurde in einem separaten Compoundierschritt im Schmelzezustand gemischt und für den weiteren Einsatz granuliert.

Mittlere Polymerschicht (C):
- 55 Gew.-% Bormed^{®} TD109CF von Borealis, Österreich/ Polypropylen-Terpolymer
- 10 Gew.-% Bormed^{®} SC 820 CF-11 von Borealis, Österreich/ heterophasisches Propylen-Copolymer
- 20 Gew.-% Tuftec^{®} H1062 von Asahi Kasei, Japan/ Styrol-Ethylen/Butylen-Blockcopolymer
- 15 Gew.-% Engage^{®} 8003 von Dow Chemical Company, USA/ Ethylen-Octen-Polyolefin Elastomer

Die genannte Formulierung wurde in einem separaten Compoundierschritt im Schmelzezustand gemischt und für den weiteren Einsatz granuliert.

Die Schmelzen aus den granulierten Compounds der ersten Polymerschicht (A), der mittleren Polymerschicht (C) und der zweiten Polymerschicht (B) wurden mit für Polypropylen üblichen Prozessparametern (Temperatur 180 bis 230°C) auf einer Blasfolienanlage mit Wasserkühlung coextrudiert und eine Mehrschicht-Folie in Form eines Folienschlauchs, dessen Innenraum mit steril gefilterter Luft geflutet wurde, wurde erhalten.

Die Folie wurde mit einer Gesamtdicke von 200 µm gefertigt, wobei die erste Polymerschicht (A) und zweite Polymerschicht (B) jeweils eine Dicke von 15 µm und die mittlere Polymerschicht (C) eine Dicke von 170 µm aufweist. Die hergestellte Folie ist heißdampfsterilisierbar und mit 125°C temperierten Schweißwerkzeugen fest verschweißbar.

Beispiel 4 (Vergleichsbeispiel (gemäß DE 10361851 A1, Beispiel 1)):
Erste Polymerschicht (A):
- 97 Gew.-% Moplen^{®} HP525J von LyondellBasell Corp., USA/ Polypropylen-Homo-polymer
- 3 Gew.-% Tuftec^{®} H1062 von Asahi Kasei, Japan/ Styrol-Ethylen/Butylen-Block-copolymer

Die genannte Formulierung wurde in einem separaten Compoundierschritt im Schmelzezustand gemischt und für den weiteren Einsatz granuliert.

Zweite Polymerschicht (B):
- 85 Gew.-% Bormed^{®} TD109CF von Borealis, Österreich/ Polypropylen-Terpolymer
- 15 Gew.-% Tuftec^{®} H1062 von Asahi Kasei, Japan/ Styrol-Ethylen/Butylen-Block-copolymer

Die genannte Formulierung wurde in einem separaten Compoundierschritt im Schmelzezustand gemischt und für den weiteren Einsatz granuliert.

Mittlere Polymerschicht (C):
- 75 Gew.-% Bormed^{®} TD109CF von Borealis, Österreich/ Polypropylen-Terpolymer
- 20 Gew.-% Tuftec^{®} H1062 von Asahi Kasei, Japan/ Styrol-Ethylen/Butylen-Blockcopolymer
- 5 Gew.-% Engage^{®} 8003, Dow Chemical Company, USA/ Ethylen-Octen-Polyolefin Elastomer

Die genannte Formulierung wurde in einem separaten Compoundierschritt im Schmelzezustand gemischt und für den weiteren Einsatz granuliert.

Die Folie wurde mit für Polypropylen üblichen Prozessparametern auf einer Blasfolienanlage mit Wasserkühlung coextrudiert.

Die Folie wurde mit einer Gesamtdicke von 200 µm gefertigt, wobei die erste Polymerschicht (A) und zweite Polymerschicht (B) jeweils eine Dicke von 15 µm und die mittlere Polymerschicht (C) eine Dicke von 170 µm aufweist. Die hergestellte Folie ist heißdampfsterilisierbar und mit 125°C temperierten Schweißwerkzeugen fest verschweißbar.

Zur Überprüfung der Schlagzähigkeit der erhaltenen Folien wird ein Drop-Test gemäß DIN EN ISO 15747:2019-07 durchgeführt.

### Beschreibung:

- Herstellung von Infusions-(IV)-Beuteln der gewünschten Größe, z.B. 1000ml;
- IV-Beutel werden z.B. mit Wasser gefüllt und fest verschlossen (z.B. Stopfen);
- IV-Beutel werden heißdampfsterilisiert bei 121°C und müssen komplett abkühlen;
- je 10 Beutel werden bei 20°C, bei 4°C und bei -18°C für jeweils 24 Stunden gelagert;
- Danach werden die Beutel aus der entsprechenden Höhe (DIN EN ISO 15747:2019-07, Tabelle A.1) auf den Boden fallen gelassen. Ein 1000ml Beutel wird auf einer Höhe von 0,75m gelagert (Vorrichtung) und dann auf den Boden gedroppt.

Die Testergebnisse für einen Beutel mit 1000 ml Fassungsvermögen (Inhalt: Wasser) zeigt Tabelle 1.

| Mehrschichtfolie | Fallhöhe [m] | Ausfallquote* Lagerung bei 20°C | Ausfallquote* Lagerung bei bei 4°C | Ausfallquote* Lagerung bei bei -18°C | Ergebnis |
|---|---|---|---|---|---|
| Beispiel 1 | 0,75 | 0/10 | 0/10 | 0/10 | bestanden |
| Beispiel 2 | 0,75 | 0/10 | 0/10 | 0/10 | bestanden |
| Beispiel 3 (nicht erfindungsgemäß) | 0,75 | 0/10 | 2/10 | 7/10 | nicht bestanden |
| Beispiel 4 (Vergleich) | 0,75 | 0/10 | 7/10 | 10/10 | nicht bestanden |

| | | | | | |
|---|---|---|---|---|---|
| Ausfallquote*: defekte Beutel / Anzahl getestete Beutel | | | | | |

Die Ergebnisse des Drop-Tests zeigen eine direkte Korrelation zwischen den Gewichtsanteilen des Impact Modifiers in der Mittelschicht und der Kaltschlagzähigkeit bei Minustemperaturen. Nur die Mehrschichtfolien der Beispiele 1 und 2 bestehen aufgrund der erfindungsgemäßen Zusammensetzung (spezifische Impact Modifier in allen Schichten (A), (B) und (C) in spezifischen Mengen) den drop test bei Temperaturen von 4°C und -18°C.

## Patentansprüche

1. Hitzesterilisierbare Mehrschichtfolie, umfassend
a) eine erste Polymerschicht (A) enthaltend mindestens ein mit mindestens einem Impact Modifier modifiziertes Polypropylen-Homopolymer;
b) eine zweite Polymerschicht (B) enthaltend:
B1) 51 bis 68 Gew.-% - bezogen auf (B) - mindestens eines Polypropylen-Terpolymers;
B2) 12 bis 22 Gew.-% - bezogen auf (B) - mindestens eines Styrol-Blockcopolymer (SBC) Elastomers;
B3) 15 bis 35 Gew.-% - bezogen auf (B) - mindestens eines Propylen-Ethylen-(Block)Copolymers, worin - bezogen auf (B3) - der Anteil der Struktureinheiten von Ethylen ≥ 9 Gew.-%, oft 9 bis 15 Gew.-%, beträgt; und
c) eine mittlere Polymerschicht (C), die sich zwischen der ersten Polymerschicht (A) und der zweiten Polymerschicht (B) befindet, enthaltend:
C1) 20 bis 30 Gew.-% - bezogen auf (C) - mindestens eines Styrol-Blockcopolymer (SBC) Elastomers;
C2) 15 bis 30 Gew.-% - bezogen auf (C) - mindestens eines Polyethylen-Elastomers, welches ein Copolymer von Ethylen mit einem alpha-Olefin enthaltend 4 bis 12 Kohlenstoffatome ist;
C3) 40 bis 65 Gew.-% - bezogen auf (C) - mindestens eines Propylen-Ethylen-(Block)Copolymers, worin - bezogen auf (C3) - der Anteil der Struktureinheiten von Ethylen ≥ 9 Gew.-%, oft 9 bis 15 Gew.-%, beträgt.

2. Hitzesterilisierbare Mehrschichtfolie gemäß Anspruch 1, worin die zweite Polymerschicht (B) enthält:
B1) 55 bis 67 Gew.-%, bevorzugt 56 bis 66 Gew.-%;
B2) 13 bis 21 Gew.-%, bevorzugt 14 bis 20 Gew.-%;
B3) 17 bis 32 Gew.-%, bevorzugt 18 bis 30 Gew.-%.

3. Hitzesterilisierbare Mehrschichtfolie gemäß Anspruch 1 oder 2, worin die Komponente B1) ein Terpolymer von Propylen, Ethylen und einem C₄-C₁₂ α-Olefin ist, bevorzugt ein Terpolymer von Propylen, Ethylen und Butylen, ist.

4. Hitzesterilisierbare Mehrschichtfolie gemäß einem der Ansprüche 1 bis 3, worin das Styrol-Blockcopolymer (SBC) Elastomer B2) und/oder C1) ausgewählt ist aus der Gruppe bestehend aus: Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (*SEEPS*), Styrol-Isopren-Styrol-Blockcopolymer (SIS) und Styrol-Butadien-Styrol-Blockcopolymer (SBS), und besonders bevorzugt SEBS und SEPS, insbesondere SEBS.

5. Hitzesterilisierbare Mehrschichtfolie gemäß einem der Ansprüche 1 bis 4, worin die mittlere Polymerschicht (C) enthält:
C1) 21 bis 30 Gew.-%, bevorzugt 22 bis 27 Gew.-%;
C2) 15 bis 25 Gew.-%, bevorzugt 17 bis 23 Gew.-%;
C3) 45 bis 65 Gew.-%, bevorzugt 50 bis 60 Gew.-%.

6. Hitzesterilisierbare Mehrschichtfolie gemäß einem der Ansprüche 1 bis 5, worin das Polyethylen-Elastomer C2) ein Ethylen-Butylen-Copolymer und/oder ein Ethylen-Octen-Copolymer, insbesondere ein Ethylen-Octen-Copolymer ist.

7. Hitzesterilisierbare Mehrschichtfolie gemäß einem der Ansprüche 1 bis 6, worin das Propylen-Ethylen-Copolymer B3) und/oder C3) ein Propylen-Ethylen-Blockcopolymer ist.

8. Hitzesterilisierbare Mehrschichtfolie gemäß einem der Ansprüche 1 bis 7, worin die erste Polymerschicht (A) 90 bis 98 Gew.-%, insbesondere 95 bis 97 Gew.-%, eines Polypropylen-Homopolymers und 2 bis 10 Gew.-%, insbesondere 3 bis 5 Gew.-%, mindestens eines, vorzugsweise eines, Impact Modifiers ausgewählt aus Styrol-Blockcopolymeren und/oder Copolymeren von Ethylen mit mindestens einem alpha-Olefin enthaltend 4 bis 12, bevorzugt 4 bis 8 Kohlenstoffatome, enthält.

9. Hitzesterilisierbare Mehrschichtfolie gemäß einem der Ansprüche 1 bis 8, **dadurch gekennzeichnet, dass** die Mehrschichtfolie aus den Polymerschichten (A), (B) und (C) besteht, und die gesamte Folienstärke der Mehrschichtfolie 50 bis 500 µm, bevorzugt 100 bis 400 µm, beträgt, und - jeweils bezogen auf die gesamte Folienstärke der Mehrschichtfolie -
die Schichtdicke der ersten Polymerschicht (A) 5 bis 15 Gew.-%, bevorzugt 7 bis 13 Gew.-%,
die Schichtdicke der zweiten Polymerschicht (B) 5 bis 15 Gew.-%, bevorzugt 7 bis 13 Gew.-%; und
die Schichtdicke der mittleren Polymerschicht (C) 70 bis 85 Gew.-%, bevorzugt 74 bis 80 Gew.-%; beträgt.

10. Verfahren zur Herstellung einer hitzesterilisierbaren Mehrschichtfolie gemäß einem der Ansprüche 1 bis 9, wobei die erste Polymerschicht (A), die mittlere Polymerschicht (C), und die zweite Polymerschicht (B) coextrudiert werden.

11. Hitzesterilisierbare Mehrschichtfolie gemäß einem der Ansprüche 1 bis 9, welche eine zusätzliche Funktionsschicht (D) umfasst, die sich benachbart zu der ersten Polymerschicht (A) auf der äußeren Seite von (A) befindet, und wobei Funktionsschicht (D) mindestens ein Material enthält, ausgewählt aus der Gruppe bestehend aus: Ethylen-Vinylalkohol-Copolymeren, Polyvinylalkoholen, Polyamiden, flüssigkristalllinen Polymeren (LCP), aromatischen Polyestern, bevorzugt Terephthalsäure-Polyestern, besonders bevorzugt Polyethylentherephthalaten (PET), Siliziumoxid (SiOₓ), Aluminiumoxid (AlOₓ) und Polymeren auf Acyrylatbasis.

12. Hitzesterilisierbare Mehrschichtfolie gemäß Anspruch 11, worin Funktionsschicht (D) aus PET/SiOₓbesteht.

13. Verfahren zur Herstellung eines kaschierten Mehrschichtfolienschlauches aus
einer hitzesterilisierbaren Mehrschichtfolie gemäß einem der Ansprüche 11 oder 12 umfassend
die folgenden Schritte:
(a') Herstellen eines Folienschlauches aus einer gemäß Anspruch 10 hergestellten Mehrschichtfolie durch ein Blasfolienverfahren, wobei der Innenraum des Folienschlauches mit - vorzugsweise steril gefilterter - Luft geflutet wird;
(b') gegebenenfalls Abkühlen des in Verfahrensschritt (a') hergestellten Folienschlauches;
(c') Beschichten des gegebenenfalls abgekühlten Folienschlauches mit einer Haftkleberadhäsivschicht auf mindestens einer Seite (erste Polymerschicht (A)) des Folienschlauches;
(d') gegebenenfalls Trocknen des mit der Haftkleberadhäsivschicht versehenen Folienschlauches;
(e') Kaschieren der mindestens einen mit der Haftkleberadhäsivschicht beschichteten Seite (erste Polymerschicht (A)) des Folienschlauches mit einer Funktionsschicht (D), insbesondere einer SiOx/PET-Funktionsschicht;
(f) gegebenenfalls Trocknen bzw. Aushärten des kaschierten Folienschlauches.

14. Verwendung einer hitzesterilisierbaren Mehrschichtfolie gemäß einem der Ansprüche 1 bis 9, 11 oder 12 zur Herstellung einer medizinischen Verpackung, vorzugsweise eines medizinischen Beutels.

15. Verfahren zur Herstellung einer medizinischen Verpackung, bevorzugt eines Beutels, aus einer hitzesterilisierbaren Mehrschichtfolie gemäß den Ansprüchen 1 bis 9, 11 oder 12 umfassend die Schritte:
a) Bereitstellen mindestens einer gemäß Anspruch 10 oder 13 hergestellten Mehrschichtfolie ;
b) gegebenenfalls Bereitstellen eines oder mehrerer Portelemente und/oder Schläuche;
c) Formen einer medizinischen Verpackung, bevorzugt eines Beutels, aus der mindestens einen Mehrschichtfolie, so dass die zweite Polymerschicht (B) die innere Fläche der medizinischen Verpackung, bevorzugt des Beutels, und die erste Polymerschicht (A) die äußere Fläche der medizinischen Verpackung, bevorzugt des Beutels, bildet;
d) gegebenenfalls Positionieren der Portelemente und/oder Schläuche zwischen den inneren Flächen an den Konturen der medizinischen Verpackung, bevorzugt des Beutels;
e) In-Kontakt-Bringen der inneren Flächen an den Konturen der medizinischen Verpackung, bevorzugt des Beutels, miteinander und mit gegebenenfalls dazwischen positionierten Portelementen und/oder Schläuchen;
f) Verschweißen der inneren Flächen an den Konturen der medizinischen Verpackung, bevorzugt des Beutels, miteinander und mit gegebenenfalls dazwischen positionierten Portelementen und/oder Schläuchen.

## Claims

1. Heat-sterilizable multilayer film comprising
a) a first polymer layer (A) containing at least one polypropylene homopolymer modified with at least one impact modifier;
b) a second polymer layer (B) containing:
B1) 51% to 68% by weight - based on (B) - of at least one polypropylene terpolymer;
B2) 12% to 22% by weight - based on (B) - of at least one styrene block copolymer (SBC) elastomer;
B3) 15% to 35% by weight - based on (B) - of at least one propylene-ethylene (block) copolymer, in which - based on (B3) - the proportion of the structural units of ethylene is ≥ 9% by weight, in many cases 9% to 15% by weight; and
c) a central polymer layer (C) situated between the first polymer layer (A) and the second polymer layer (B), containing:
C1) 20% to 30% by weight - based on (C) - of at least one styrene block copolymer (SBC) elastomer;
C2) 15% to 30% by weight - based on (C) - of at least one polyethylene elastomer which is a copolymer of ethylene with an alpha-olefin containing 4 to 12 carbon atoms;
C3) 40% to 65% by weight - based on (C) - of at least one propylene-ethylene (block) copolymer, in which - based on (C3) - the proportion of the structural units of ethylene is ≥ 9% by weight, in many cases 9% to 15% by weight.

2. Heat-sterilizable multilayer film as claimed in claim 1, in which the second polymer layer (B) contains:
B1) 55% to 67% by weight, preferably 56% to 66% by weight;
B2) 13% to 21% by weight, preferably 14% to 20% by weight;
B3) 17% to 32% by weight, preferably 18% to 30% by weight.

3. Heat-sterilizable multilayer film as claimed in claim 1 or 2, in which component B1) is a terpolymer of propylene, ethylene and a C₄-C₁₂ α-olefin, preferably a terpolymer of propylene, ethylene and butylene.

4. Heat-sterilizable multilayer film as claimed in any of claims 1 to 3, in which the styrene block copolymer (SBC) elastomer B2) and/or C1) is selected from the group consisting of: styrene-ethylene-butylene-styrene block copolymer (SEBS), styrene-ethylene-propylene-styrene block copolymer (SEPS), styrene-ethylene-ethylene-propylene-styrene block copolymer (*SEEPS*), styrene-isoprene-styrene block copolymer (SIS) and styrene-butadienestyrene block copolymer (SBS), and particularly preferably SEBS and SEPS, in particular SEBS.

5. Heat-sterilizable multilayer film as claimed in any of claims 1 to 4, in which the central polymer layer (C) contains:
C1) 21% to 30% by weight, preferably 22% to 27% by weight;
C2) 15% to 25% by weight, preferably 17% to 23% by weight;
C3) 45% to 65% by weight, preferably 50% to 60% by weight.

6. Heat-sterilizable multilayer film as claimed in any of claims 1 to 5, in which the polyethylene elastomer C2) is an ethylene-butylene copolymer and/or an ethylene-octene copolymer, in particular an ethylene-octene copolymer.

7. Heat-sterilizable multilayer film as claimed in any of claims 1 to 6, in which the propylene-ethylene copolymer B3) and/or C3) is a propylene-ethylene block copolymer.

8. Heat-sterilizable multilayer film as claimed in any of claims 1 to 7, in which the first polymer layer (A) contains 90% to 98% by weight, in particular 95% to 97% by weight, of a polypropylene homopolymer and 2% to 10% by weight, in particular 3% to 5% by weight, of at least one, preferably one, impact modifier selected from styrene block copolymers and/or copolymers of ethylene with at least one alpha-olefin containing 4 to 12, preferably 4 to 8, carbon atoms.

9. Heat-sterilizable multilayer film as claimed in any of claims 1 to 8, **characterized in that** the multilayer film consists of the polymer layers (A), (B) and (C), and the total film thickness of the multilayer film is 50 to 500 µm, preferably 100 to 400 µm, and - based in each case on the total film thickness of the multilayer film -
the layer thickness of the first polymer layer (A) is 5% to 15% by weight, preferably 7% to 13% by weight,
the layer thickness of the second polymer layer (B) is 5% to 15% by weight, preferably 7% to 13% by weight; and
the layer thickness of the central polymer layer (C) is 70% to 85% by weight, preferably 74% to 80% by weight.

10. Method for producing a heat-sterilizable multilayer film as claimed in any of claims 1 to 9, wherein the first polymer layer (A), the central polymer layer (C) and the second polymer layer (B) are coextruded.

11. Heat-sterilizable multilayer film as claimed in any of claims 1 to 9, which comprises an additional functional layer (D) adjacent to the first polymer layer (A) on the outer side of (A) and wherein functional layer (D) contains at least one material selected from the group consisting of: ethylene-vinyl alcohol copolymers, polyvinyl alcohols, polyamides, liquid crystal polymers (LCP), aromatic polyesters, preferably terephthalic acid polyesters, particularly preferably polyethylene terephthalates (PET), silicon oxide (SiOₓ), aluminum oxide (AlOₓ) and acrylate-based polymers.

12. Heat-sterilizable multilayer film as claimed in claim 11, in which functional layer (D) consists of PET/SiOₓ.

13. Method for producing a laminated multilayer film sleeve made of a heat-sterilizable multilayer film as claimed in either of claims 11 and 12, comprising the following steps:
(a') producing a film sleeve made of a multilayer film produced according to claim 10 by a blown film method, wherein the interior of the film sleeve is flooded with - preferably sterile-filtered - air;
(b') optionally cooling the film sleeve produced in method step (a');
(c') coating the optionally cooled film sleeve with a pressure-sensitive adhesive layer on at least one side (first polymer layer (A)) of the film sleeve;
(d') optionally drying the film sleeve provided with the pressure-sensitive adhesive layer;
(e') laminating the at least one side (first polymer layer (A)) of the film sleeve coated with the pressure-sensitive adhesive layer with a functional layer (D), in particular a SiOx/PET functional layer;
(f) optionally drying and curing the laminated film sleeve.

14. Use of a heat-sterilizable multilayer film as claimed in any of claims 1 to 9, 11 or 12 for production of a medical package, preferably a medical bag.

15. Method for producing a medical package, preferably a bag, made of a heat-sterilizable multilayer film as claimed in claims 1 to 9, 11 or 12, comprising the steps of:
a) providing at least one multilayer film produced according to claim 10 or 13;
b) optionally providing one or more port elements and/or flexible tubes;
c) shaping a medical package, preferably a bag, from the at least one multilayer film, such that the second polymer layer (B) forms the inner face of the medical package, preferably the bag, and the first polymer layer (A) forms the outer face of the medical package, preferably the bag;
d) optionally positioning the port elements and/or flexible tubes between the inner faces at the contours of the medical package, preferably the bag;
e) contacting the inner faces at the contours of the medical package, preferably the bag, with one another and with port elements and/or flexible tubes optionally positioned in between;
f) heat-sealing the inner faces at the contours of the medical package, preferably the bag, with one another and with port elements and/or flexible tubes optionally positioned in between.

## Revendications

1. Feuille multicouche thermostérilisable, comprenant a) une première couche polymère (A) contenant au moins un homopolymère de polypropylène modifié par au moins un modifiant choc,
b) une deuxième couche polymère (B) contenant :
B1) 51 à 68 % en poids - par rapport à (B) - d'au moins un terpolymère de polypropylène ;
B2) 12 à 22 % en poids - par rapport à (B) - d'au moins un élastomère de copolymère à blocs styréniques (SBC) ;
B3) 15 à 35 % en poids - par rapport à (B) - d'au moins un copolymère (à blocs) propylène-éthylène, dans lequel - par rapport à (B3) - la proportion des motifs structuraux éthylène est ≥ 9 % en poids, souvent de 9 à 15 % en poids ; et
c) une couche polymère centrale (C), qui se trouve entre la première couche polymère (A) et la deuxième couche polymère (B), contenant :
C1) 20 à 30 % en poids - par rapport à (C) - d'au moins un élastomère de copolymère à blocs styréniques (SBC) ;
C2) 15 à 30 % en poids - par rapport à (C) - d'au moins un élastomère de polyéthylène qui est un copolymère d'éthylène et d'une alpha-oléfine ayant 4 à 12 atomes de carbone ;
C3) 40 à 65 % en poids - par rapport à (C) - d'au moins un copolymère (à blocs) propylène-éthylène, dans lequel - par rapport à (C3) - la proportion des motifs structuraux éthylène est ≥ 9 % en poids, souvent de 9 à 15 % en poids.

2. Feuille multicouche thermostérilisable selon la revendication 1, dans laquelle la deuxième couche polymère (B) contient :
B1) 55 à 67 % en poids, de préférence 56 à 66 % en poids ;
B2) 13 à 21 % en poids, de préférence 14 à 20 % en poids ;
B3) 17 à 32 % en poids, de préférence 18 à 30 % en poids.

3. Feuille multicouche thermostérilisable selon la revendication 1 ou 2, dans laquelle le composant B1) est un terpolymère de propylène, d'éthylène et d'une α-oléfine en C₄-C₁₂, de préférence un terpolymère de propylène, d'éthylène et de butylène.

4. Feuille multicouche thermostérilisable selon l'une des revendications 1 à 3, dans laquelle l'élastomère B2) et/ou C1) de copolymère à blocs styréniques (SBC) est choisi dans le groupe consistant en le copolymère à blocs styrène-éthylène-butylène-styrène (SEBS), le copolymère à blocs styrène-éthylène-propylène-styrène (SEPS), le copolymère à blocs styrène-éthylène-éthylène-propylène-styrène (SEEPS), le copolymère à blocs styrène-isoprène-styrène (SIS) et le copolymère à blocs styrène-butadiène-styrène (SBS) et d'une manière particulièrement préférée le SEBS et le SEPS, en particulier le SEBS.

5. Feuille multicouche thermostérilisable selon l'une des revendications 1 à 4, dans laquelle la couche polymère centrale (C) contient :
C1) 21 à 30 % en poids, de préférence 22 à 27 % en poids ;
C2) 15 à 25 % en poids, de préférence 17 à 23 % en poids ;
C3) 45 à 65 % en poids, de préférence 50 à 60 % en poids.

6. Feuille multicouche thermostérilisable selon l'une des revendications 1 à 5, dans laquelle l'élastomère de polyéthylène C2) est un copolymère éthylène-butylène et/ou un copolymère éthylène-octène, en particulier un copolymère éthylène-octène.

7. Feuille multicouche thermostérilisable selon l'une des revendications 1 à 6, dans laquelle le copolymère B3) et/ou C3) de propylène-éthylène est un copolymère à blocs propylène-éthylène.

8. Feuille multicouche thermostérilisable selon l'une des revendications 1 à 7, dans laquelle la première couche polymère (A) contient 90 à 98 % en poids, en particulier 95 à 97 % en poids d'un homopolymère de polypropylène et 2 à 10 % en poids, en particulier 3 à 5 % en poids d'au moins un, de préférence d'un modifiant choc choisi parmi les copolymères à blocs styréniques et/ou les copolymères de l'éthylène et d'au moins une alpha-oléfine contenant 4 à 12, de préférence 4 à 8 atomes de carbone.

9. Feuille multicouche thermostérilisable selon l'une des revendications 1 à 8, **caractérisée en ce que** la feuille multicouche est constituée des couches polymères (A), (B) et (C), et l'épaisseur totale de la feuille multicouche est de 50 à 500 µm, de préférence de 100 à 400 µm, et - dans chaque cas par rapport à l'épaisseur totale de la feuille multicouche - l'épaisseur de la première couche polymère (A) est de 5 à 15 % en poids, de préférence de 7 à 13 % en poids, l'épaisseur de la deuxième couche polymère (B) est de 5 à 15 % en poids, de préférence de 7 à 13 % en poids ; et
l'épaisseur de la couche polymère centrale (C) est de 70 à 85 % en poids, de préférence de 74 à 80 % en poids.

10. Procédé de fabrication d'une feuille multicouche thermostérilisable selon l'une des revendications 1 à 9, dans lequel on coextrude la première couche polymère (A), la couche polymère centrale (C) et la deuxième couche polymère (B).

11. Feuille multicouche thermostérilisable selon l'une des revendications 1 à 9, qui comprend une couche fonctionnelle supplémentaire (D), qui se trouve au voisinage de la première couche polymère (A) sur la face extérieure de (A), et dans laquelle la couche fonctionnelle (D) contient au moins un matériau choisi dans le groupe consistant en les copolymères éthylènealcool vinylique, les poly(alcool vinyliques), les polyamides, les polymères cristaux liquides (LCP), les polyesters aromatiques, de préférence les polyesters de l'acide téréphtalique, d'une manière particulièrement préférée les poly(téréphtalates d'éthylène) (PET), l'oxyde de silicium (SiOₓ), l'oxyde d'aluminium (AlOₓ) et les polymères à base d'acrylates.

12. Feuille multicouche thermostérilisable selon la revendication 11, dans laquelle la couche fonctionnelle (D) est constituée de PET/SiOₓ.

13. Procédé de fabrication d'une gaine multicouche contrecollée à partir d'une feuille multicouche thermostérilisable selon l'une des revendications 11 ou 12, comprenant les étapes suivantes :
(a') fabrication d'une gaine à partir de la feuille multicouche fabriquée selon la revendication 10, par un procédé par soufflage, l'espace intérieur de la gaine étant baigné d'air, de préférence filtré dans des conditions stériles ;
(b') éventuellement refroidissement de la gaine fabriquée dans l'étape (a') ;
(c') application sur la gaine éventuellement refroidie d'une couche d'adhésifs de contact sur au moins une face (première couche polymère (A)) de la gaine ;
(d') éventuellement séchage de la gaine pourvue de la couche d'adhésifs de contact ;
(e') contre-collage de l'au moins une face, revêtue de la couche d'adhésifs de contact (première couche polymère (A)) de la gaine, d'une couche fonctionnelle (D), en particulier d'une couche fonctionnelle de SiOₓ/PET ;
(f) éventuellement séchage ou durcissement de la gaine contrecollée.

14. Utilisation d'une feuille multicouche thermostérilisable selon l'une des revendications 1 à 9, 11 ou 12 pour la fabrication d'un emballage médical, de préférence d'un sachet médical.

15. Procédé de fabrication d'un emballage médical, de préférence d'un sachet, à partir d'une feuille multicouche thermostérilisable selon les revendications 1 à 9, 11 ou 12, comprenant les étapes :
a) fourniture d'au moins une feuille multicouche fabriquée selon la revendication 10 ou 13 ;
b) éventuellement fourniture d'un ou plusieurs éléments anti-contamination et/ou gaines ;
c) façonnage d'un emballage médical, de préférence d'un sachet, à partir de l'au moins une feuille multicouche, de façon que la deuxième couche polymère (B) forme la surface intérieure de l'emballage médical, de préférence du sachet, et que la première couche polymère (A) forme la couche extérieure de l'emballage médical, de préférence du sachet ;
d) éventuellement positionnement des éléments anticontamination et/ou des gaines entre les faces internes sur les contours de l'emballage médical, de préférence du sachet ;
e) mise en contact des faces intérieures sur les contours de l'emballage médical, de préférence du sachet, l'une avec l'autre et avec les éléments anticontamination et/ou gaines éventuellement positionnés entre elles ;
f) soudage des faces intérieures sur les contours de l'emballage médical, de préférence du sachet, l'une à l'autre et aux éléments anticontamination et/ou gaines éventuellement positionnés entre elles.
